# EUROPEAN PATENT APPLICATION

(11) **EP 1 808 281 A1**
(43) Date of publication of application: **18.07.2007**
(21) Application number: 06100298.6
(22) Date of filing: 12.01.2006
(51) Int. Cl.: B29C 41/06, B65D 19/00

(54) **Mould for manufacturing a pallet by means of rotational moulding, as well as a pallet**

(71) Applicant: Zweva Rotomoulding N.V., 2200 Noorderwijk-Herentals (BE)
(72) Inventor: van 't Veer, Pieter, 2584 AT Den Haag (NL); Claus, Filip Jan Clement, 2200 Noorderwijk-Herentals (BE)
(74) Representative: van Westenbrugge, Andries

(57) **Abstract**

A mould for manufacturing a pallet (3) by means of rotational moulding, which pallet (3) comprises a top wall (18), a bottom wall (19) as well as peripheral walls (22,23), at least one of which peripheral walls is provided with an opening (26) into which a prong of a fork-lift truck can be inserted in connection with lifting the pallet, which mould comprises two mould halves (1,2) which define a mould top (4), a mould bottom (6) as well as peripheral mould sides and which in the state where they are closed onto one another define a mould cavity (30) which is the negative of the external shape of the pallet. The mould halves (1,2) have at least one pair of main contact surfaces (13,15) which extend transversely with respect to the mould top (4) and the mould bottom (6), which main contact surfaces are in contact with one another in the assembled state of the mould and define the opening in said at least one peripheral wall (22) of the pallet (3).

## Description

The invention refers to a mould for manufacturing a pallet by means of rotational moulding, which pallet comprises a top wall, a bottom wall as well as peripheral walls, at least one of which peripheral walls is provided with an opening into which a prong of a fork-lift truck can be inserted in connection with lifting the pallet, which mould comprises two mould halves which define a mould top, a mould base as well as peripheral mould sides and which in the state where they are closed onto one another define a mould cavity which is the negative of the external shape of the pallet.

Such a mould is disclosed in the International Patent Application WO 2004/065093. This international patent application discloses a rotational moulding installation in which flat box-shaped moulds are arranged, the peripheral mould sides of which are divided. By means of these box-shaped moulds, pallets can be manufactured where the bottom wall comprises channels opening downwards into which the prongs of a fork-lift truck can be inserted. The pallet concerned is held pressed onto the prongs by the force of gravity, which acts on the pallet and the load accommodated thereon.

The disadvantage of a pallet manufactured with these known shallow box-shaped moulds lies in the fact that the prongs are poorly stabilised with respect to the channels opening downwards. If the load exerts a lateral force on the pallet, for example because the fork-lift truck concerned makes a sharp turn, or travels over a sloping surface, the pallet may actually be lifted off one or both prongs, as a result of which the load is shed onto the ground.

This disadvantage results from the fact that to date it has not proved very feasible to form enclosed channels or openings in such a pallet by means of rotational moulding. Hence this disadvantage is tolerated, although this is less desirable.

In addition, the discontinuous form of the open underside as a result of the channels is a disadvantage in the transport of pallets over a base such as a roller conveyor.

The aim of the invention is to provide a mould of the abovementioned type for manufacturing pallets by means of rotational moulding wherein these disadvantages are eliminated. This aim is achieved in that the mould halves have at least one pair of main contact surfaces that extend transversely with respect to the mould top surface and the mould bottom surface, which main contact surfaces are in contact with one another in the assembled state of the mould and define the opening in said at least one peripheral wall.

In the closed or assembled state of the mould the two main contact surfaces that are fixed to the mould bottom and mould top are in contact with one another, such that at the point of contact between said two main contact surfaces, no plastic part can form during the rotational moulding. Since the main contact surfaces extend transversely with respect to the mould top and the mould bottom, the opening concerned is situated in one of the peripheral walls of the pallet manufactured in this way. Such an opening, which is entirely enclosed, is especially suitable for inserting the prong of a fork-lift truck therein. Owing to the enclosed nature of such an opening, the pallet is now also stabilised against overturning with respect to the prongs of the fork-lift truck.

The mould according to the invention can be constructed in many different ways, depending on the desired external shape of the pallet to be achieved. Since the top wall of the pallet is preferably completely level or flat, in the mould according to the invention provision is made that the mould top is flat. A projecting mould part that defines one of the main contact surfaces is fixed to the flat mould top. The peripheral mould sides are in this case fixed to the mould bottom, one of which peripheral mould sides defines the other main contact surface. The level or flat top can also have small surface details such as ridges.

In connection with the insertion of the prongs of the fork-lift truck, the bottom wall of the pallet is preferably made partially recessed. To this end, the mould is made with a recessed mould bottom, which recess is delimited by peripheral recess sides which extend at some distance from and alongside the peripheral mould sides. In such mould halves, auxiliary contact surfaces are provided which extend transversely with respect to the mould top and the mould bottom, which auxiliary contact surfaces are in contact with one another in the assembled state of the mould and define an auxiliary passage in said at least one peripheral recess wall of the pallet opposite the associated main passage of the pallet.

With a mould made like this, the prong of a fork-lift truck can then be inserted through the opening and the auxiliary passage located behind the latter right into the recess in the bottom surface of the pallet. Because the prong of the fork-lift truck is now also surrounded by the pallet at the bottom, the pallet is very well protected from overturning. Obviously, any desired number of openings and associated auxiliary passages can be made in the pallet, and this can in particular be achieved by means of a mould wherein the mould halves have several pairs of main surfaces and associated pairs of auxiliary contact surfaces, each pair of which auxiliary contact surfaces is situated opposite a pair of main contact surfaces.

The invention also relates to a pallet comprising a top wall and bottom wall as well as peripheral walls, at least one of which peripheral walls is provided with an opening into which a prong of a fork-lift truck can be inserted in connection with lifting the pallet, which opening is entirely surrounded in the peripheral direction.

The main contact surfaces and the auxiliary contact surfaces can be somewhat inclined to facilitate the desired separation of the mould halves.

The invention will be explained in more detail below with reference to an illustrative embodiment shown in the figures of a mould and a pallet according to the invention.
Figure 1 shows a partial and exposed view of an assembled mould with the pallet formed therein according to the invention.
Figure 2 shows a section along II-II in Figure 1.
Figure 3 shows an enlarged detail III from Figure 2.
Figure 4 shows the mould with pallet in an exploded state.
Figure 5 shows a section along V-V in Figure 4.
Figure 6 shows a perspective view of the pallet according to the invention, with the top facing upwards.
Figure 7 shows a perspective view of the pallet according to the invention, with the bottom facing upwards.
Figure 8 shows the section along VIII in Figure 5.

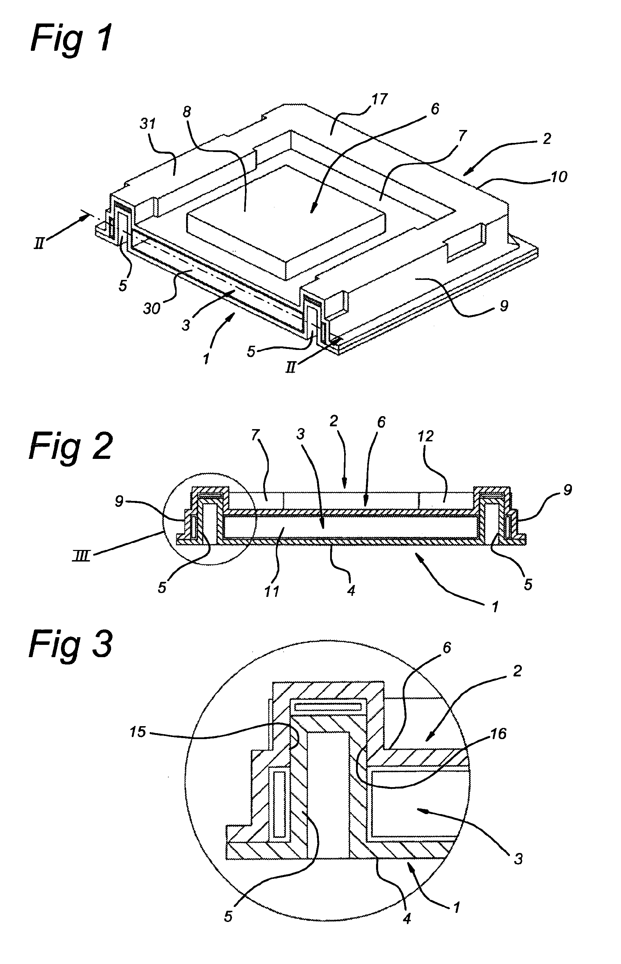

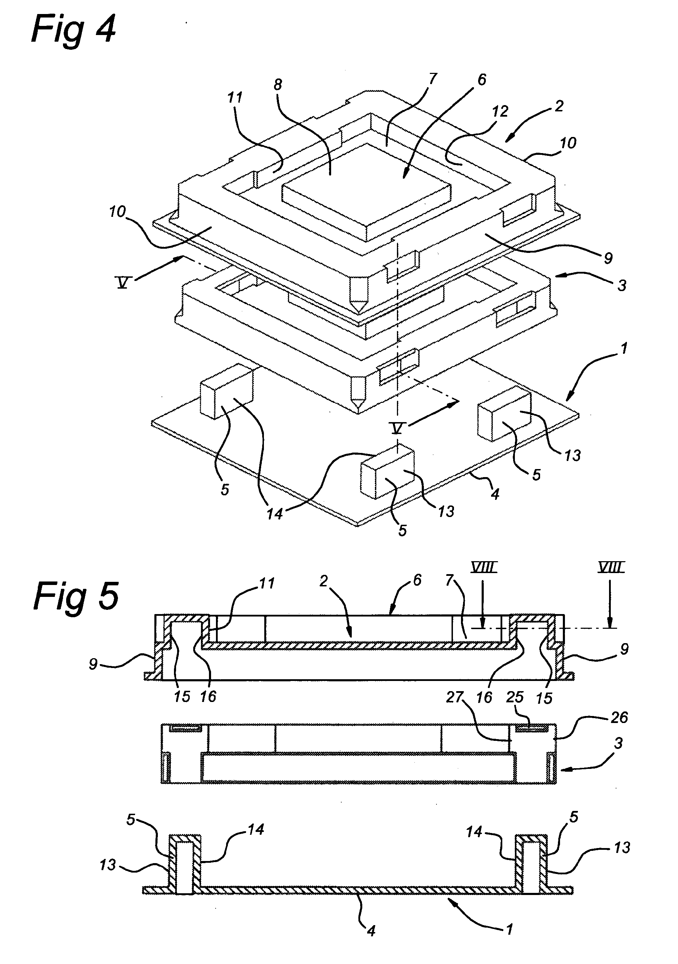

The mould according to the invention shown in Figures 1, 2 and 3 comprises an upper mould half 1 as well as a lower mould half 2, between which the pallet 3 is formed by means of rotational moulding. The exploded views in Figures 4 and 5 show the same components. The upper mould half 1 and the lower mould half 2 together define a mould cavity 30, which is the negative of the external shape of the pallet 3.

The mould top 4 defined by the upper mould half 1 is flat or level and has four protruding mould parts 5. The mould bottom 6 defined by the lower mould half 2 has a recess 7 in which a projection 8 is provided. In addition, the lower mould half 2 has four peripheral mould sides 9, 10 as well as a corresponding number of peripheral recess sides 11, 12 which extend parallel to the peripheral mould sides 9, 10 at a location further inwards. These peripheral recess sides 11, 12 delimit the recess 7.

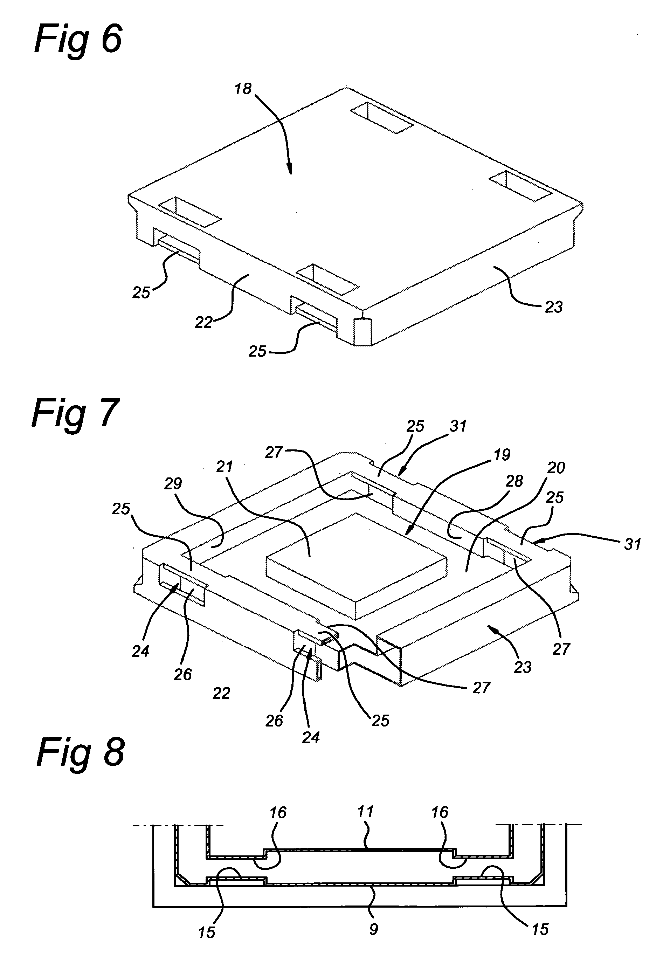

The mould parts 5 each have a main contact surface 13 and an auxiliary contact surface 14 facing away from this. The two peripheral mould sides 9 have main contact surfaces 15, while the opposing peripheral recess sides 14 have auxiliary contact surfaces 16 located opposite the main contact surfaces 15: see Figure 5. These auxiliary contact surfaces 16 project outwards relative to the rest of the peripheral recess sides 11, just as the main contact surfaces 15 project inwards relative to the rest of the peripheral mould sides 9: see the cross-section in Figure 8. In this context it is noted that "inwards" is understood to mean towards the pallet area where the recess is located and "outwards" is understood to mean towards the area around the periphery of the pallet.

As shown in Figures 1, 2 and 5, these main contact surfaces 15 on the peripheral mould sides 9 come into contact with the main contact surfaces 13 on the mould parts 5, while the auxiliary contact surfaces 16 on the peripheral recess sides 11 come into contact with the auxiliary contact surfaces 14 on the mould parts 5. The respective base sides 31 and 17 extend between the peripheral mould sides 9, 10 and the peripheral recess sides 11, 12. As can be seen in the section in Figures 1, 2 and 3, the mould parts 5 do not extend as far as the base sides 17, 31, so that a space remains between them in which a base section 25 of the pallet 3 can form.

With reference to Figures 6 and 7, this pallet 3 has a top wall 18 and a bottom wall 19, respectively. The top wall 18 is entirely flat, while the bottom wall 19 has a recessed section 20 with a thickened area 21. In addition, the pallet 3 has peripheral walls 22, 23, as well as recess walls 28, 29 that extend in parallel to these at a location further inwards and delimit the recessed section 20. The peripheral walls 23 are entirely closed, while there are openings 24 in the peripheral walls 22. The recess walls 29 are correspondingly closed, while in the recess walls 28 there are auxiliary passages 27 that are each aligned with respect to an opening 24 in the peripheral walls 22. A prong of a fork-lift truck can be inserted in each case through two pairs of an opening 24 and an auxiliary passage 27 located in the extension of one another. These prongs extend through the recessed section 20 and alongside the thickened area 21, such that are stably enclosed between a recess wall 29 and the thickened area 21.

This stable confinement is furthermore in particular obtained by means of the base sections 25, which close off the openings 24 and auxiliary passages 27 on the base side of the pallet 3. These base sections 25 are formed in the open part of the assembled mould located between the mould parts 5 and the base sides 31 of the lower mould half 2, as explained above.

## Claims

1. Mould for manufacturing a pallet (3) by means of rotational moulding, which pallet (3) comprises a top wall (18), a bottom wall (19) as well as peripheral walls (22, 23), at least one of which peripheral walls is provided with an opening (26) into which a prong of a fork-lift truck can be inserted in connection with lifting the pallet (3), which mould comprises two mould halves (1, 2) which define a mould top (4), a mould bottom (6) as well as peripheral mould sides (9, 10) and which in the state where they are closed onto one another define a mould cavity (30) which is the negative of the external shape of the pallet (3), **characterised in that** the mould halves (1, 2) have at least one pair of main contact surfaces (13, 15) which extend transversely in relation to the mould top (4) and the mould bottom (6), which main contact surfaces (13, 15) are in contact with one another in the assembled state of the mould and define the opening (24) in said at least one peripheral wall (22) of the pallet (3).

2. Mould according to Claim 1, wherein the mould top (4) is flat, and has at least one mould part (5) protruding with respect to the flat mould top (4), which mould part (5) defines one main contact surface (13) of the main contact surfaces, and the mould bottom (6) includes the peripheral mould sides (9, 10), one peripheral mould side (9) of which peripheral mould sides defines the other main contact surface (15).

3. Mould according to Claim 2, wherein the main contact surface (15) that is located on one peripheral mould side (9) is offset inwards with respect to the remainder of said peripheral mould side (9).

4. Mould according to Claim 1, 2 or 3, for manufacturing a pallet (3), the bottom wall (19) of which is made with a recess delimited by peripheral recess walls (28, 29), wherein the mould bottom (6) is recessed with a central recess (7), which recess (7) is delimited by peripheral recess sides (11, 12) which extend at some distance from and alongside the peripheral mould sides (9, 10), and the mould halves (1, 2) each include at least one pair of auxiliary contact surfaces (14, 16) which extend transversely with respect to the mould top (4) and the mould bottom (6), which auxiliary surfaces (14, 16) are in contact with one another in the assembled state of the mould and define an auxiliary opening (27) in said at least one peripheral recess wall (28) of the pallet (3) opposite the associated opening (26) in the associated peripheral wall of the pallet (3).

5. Mould according to Claim 4 when dependent on Claim 2 or 3, wherein the mould part (5) has an auxiliary contact surface (14) facing away from the main contact surface (13) and one (11) of which peripheral recess sides defines the other auxiliary contact surface (16).

6. Mould according to Claim 5, wherein the auxiliary contact surface (16) that is situated on a peripheral recess side (11) is offset outwards with respect to the remainder of the peripheral recess side (11).

7. Mould according to Claim 6, wherein the main contact surface (15) that is situated on one of the peripheral mould sides (9) faces the auxiliary contact surface (16) that is situated on one of the peripheral recess sides (11).

8. Mould according to one of Claims 4 - 7, wherein a projection (8) is situated in the middle of the recess (7) at some distance from the peripheral recess sides (11, 12).

9. Mould according to one of the preceding claims, wherein the mould halves (1, 2) have several pairs of main contact surfaces (13, 15).

10. Mould according to Claim 9 when dependent on one of Claims 4-8, wherein the mould halves (1, 2) have several pairs of auxiliary contact surfaces (14, 16), which pairs of auxiliary contact surfaces (14, 16) are each situated opposite a pair of main contact surfaces (13, 15).

11. Pallet (3) manufactured according to the method according to one of the preceding claims, comprising a top wall (18), a bottom wall (19) as well as peripheral walls (22, 23), at least one of which peripheral walls (22, 23) is provided with an opening (26) into which a prong of a fork-lift truck can be inserted in connection with lifting the pallet (3), which opening (26) is entirely surrounded in the peripheral direction.

12. Pallet (3) according to Claim 10, wherein the bottom wall (19) is made with a recess delimited by peripheral recess walls (28, 29), which peripheral recess walls (28, 29) extend alongside the peripheral walls (22, 23) at a location further inwards, and an auxiliary passage (27) is provided in one of the peripheral recess walls (28, 29), which auxiliary passage (27) is aligned with respect to the opening (26).

13. Pallet (3) according to Claim 11, wherein the peripheral walls (22, 23) and the peripheral recess walls (28, 29) are connected at their bottom end by respective base sides (31, 17), which base sides at the location of the opening (26) and the auxiliary passage (27) define a base section (25) which closes off the opening (26) and the auxiliary passage (27) on the base side of the pallet (3).

14. Pallet (3) according to Claim 11 or 12, wherein at least two pairs of an opening (26) and an auxiliary passage (27) are provided, such that in each case one pair is situated in opposing peripheral walls (22) and peripheral recess walls (28), respectively.

15. Pallet (3) according to Claim 13 or 14, wherein in opposing peripheral walls (22) and peripheral recess walls (28) four pairs of an opening (26) and an auxiliary passage (27) are provided in each case, such that in each case two pairs next to one another are provided in opposing peripheral walls (22) and peripheral recess walls (28), respectively.

16. Pallet (3) according to one of Claims 11 - 14, wherein the recess (7) located in the bottom wall (19) is provided with a projection (8).

17. Pallet (3) according to Claim 14 and 15, wherein the projection (8) is bounded on both sides by imaginary paths which extend between the four pairs of openings (26) and auxiliary passages (27), in connection with the insertion of the prongs of a fork-lift truck.
